# EUROPEAN PATENT APPLICATION

(11) **EP 4 644 847 A1**
(43) Date of publication of application: **05.11.2025**
(21) Application number: 24173528.1
(22) Date of filing: 30.04.2024
(51) Int. Cl.: G01G 19/14

(54) **A LOAD CELL ASSEMBLY**

(71) Applicant: Eilersen Electric Digital Systems IP ApS, 2960 Rungsted Kyst (DK)
(72) Inventor: Schlicker, Sebastian Mejlvang, 2960 Rungsted Kyst (DK)
(74) Representative: Dragsted Partners A/S

(57) **Abstract**

A load cell assembly configured to measure an axial load in a direction of a central axis of the load cell assembly, the load cell assembly comprising: a load cell body having a first end and a second end, a load transmission member configured to transfer a load to the load cell body in a direction coaxial with the central axis of the load cell, a first connection member being connected with the first end of the load cell, where the first connection member has a first end facing the load transmission member, the first end having a first diameter, and a second end having a second diameter, and a first connection surface extending from the first diameter to the second diameter, a second connection member being connected with the load transmission member, where the second connection member has a first end facing the load connection member, the first end having a third diameter and a second end facing the load cell, the second end having a fourth diameter, and a second connection surface extending from the third diameter to the fourth diameter, where the first diameter and the third diameter are different from the second diameter and fourth diameter, where the first connection surface faces the central axis of the load cell assembly and the second connection surface faces the first connection surface, or the second connection surface faces the central axis of the load cell assembly, and the first connection surface faces the second connection surface.

## Description

### Technical field

A load cell assembly configured to measure an axial load in a direction of a central axis of the load cell assembly.

### Description

Tension load cells are apparatuses that are configured to convert a tension force into a signal that can be measured and standardized. A tension load cell may often be positioned in a mechanical communication between two parts, where one end of the load cell is connected to a first part, a second end is connected to a second part, and the load cell measures the force applied between the two parts.

A common tension load cell may be seen as an S-type load cell, where the load cell is configured to measure tensile forces, where both ends of the load cell are provided with an opening having an threaded inners surface allowing a threaded bolt or a threaded fastener to be attached to the load cell. Such load cells are often utilized for measuring small and medium loads, where the loads may be up to 5 tons, typically.

A common problem with an S-type load cell is that the load cell is only considered as being accurate when a non-eccentric load is applied to the load cell, i.e. where the force applied is parallel to the force application axis of the load cell. If an eccentric load is applied to the load cell, the force applied may deform the load cell and cause the measurement to be inaccurate.

Furthermore, if a large load is repeatedly applied to the load cell the threaded connection may wear out as the threads are continuous cuts that twist on an outside of a threaded member, or on the inside of an opening. This may also occur when the load measured may be seen as being eccentric, as the eccentric force may cause the threads to wear. The wear may make the connection between the cooperating threaded parts loose and thereby reduce the safety of the connection to the load cell, which may be dangerous in some situations such as when the tension load cell is used to measure the tension in a crane, hook scale or any type of lifting equipment.

There are load cells that have been developed to reduce the risk of wear and tear, where alternative attachment methods have been used to connect the load cell to a load member and a counterforce. One example is shown in WO 2019/068292, where a connection arrangement is utilized to attach a load transfer member to a second end of a load cell.

However, it has been shown that when connecting a load cell to a load transmission member, there is a need to improve the connection between the two parts, and thereby ensuring the longevity of the connection and to improve the connection to be capable of withstanding eccentric forces.

In accordance with the invention there is provided a load cell assembly configured to measure an axial load in a direction of a central axis of the load cell assembly, the load cell assembly comprising: a load cell body having a first end and a second end, a load transmission member configured to transfer a load to the load cell body in a direction coaxial with the central axis of the load cell, a first connection member being connected with the first end of the load cell, where the first connection member has a first end facing the load transmission member, the first end having a first diameter, and a second end having a second diameter, and a first connection surface extending from the first diameter to the second diameter, a second connection member being connected with the load transmission member, where the second connection member has a first end facing the load connection member, the first end having a third diameter and a second end facing the load cell, the second end having a fourth diameter, and a second connection surface extending from the third diameter to the fourth diameter, where the first diameter and the third diameter are different from the second diameter and fourth diameter, where the first connection surface faces the central axis of the load cell assembly and the second connection surface faces the first connection surface, or the second connection surface faces the central axis of the load cell assembly, and the first connection surface faces the second connection surface.

The load cell assembly is provided with a first connection member and a second connection member, the two connection members provide the contact surface between the load cell and the load transmission member. By having a first connection surface and a second connection surface that face each other it may be possible to provide an increased surface area where the first connection member is in contact with the second connection member and thereby reduce the pressure between the two contact surfaces. The reduction of pressure means that it is less likely for the connection members to become damaged than compared to traditional contacts surfaces.

Furthermore, the difference in diameters between the first and the second diameter and the third and the fourth diameter ensures that the second connection member cannot pass through the second connection member, where the direction of the increased diameter may face in the direction of the load to be applied. Thus, the first contact surface prevents the second contact surface from passing in the direction of the force to be applied.

The load transmission member may be any kind of load transmission member, where the load transmission member may be directly coupled to an installation to be weighed or where the load transmission member may be an attachment member, allowing the load transmission member to be connected to a load to be measured.

By arranging the first connection member and the second connection member as described, the second connection member will transmit the force of the load transmission member to the first connection member, and the first connection member will transmit the force to the load cell. Thus, the transition of force from the load transmission member to the load cell will be performed using the first connection member and the second connection member, where the connection surfaces of the two connection members will be utilized to transfer the load. The first connection surface area will receive the load from the second connection surface area, where the load transmitted will be in a direction that extends from the smaller diameter towards the larger diameter of the first connection member or from the second connection member. Thus, when the first connection member has a smaller diameter that is closer to the load cell and a larger diameter that is distant to the load cell, the connection surface will prevent the second connection member from moving relative to the first connection member in a direction away from the load cell, and thereby allow the force applied to the second connection member to be transferred to the first connection member, which in turn transmits the force to the load cell. Thus, if the second end of the load cell is fixed or has a counterforce, the load cell may be utilized as a tension load cell, where the load transmission member applies a force to the load cell that is in a direction away from the second end of the load cell.

In one or more exemplary embodiments the first connection surface and the second connection surface are annular. By providing the first connection surface and the second connection surface as annular surfaces, i.e. being ring shaped, the contact surface force of the load to be applied may be distributed along an entire circumference of the first connection surface area of the first connection member and/or along an entire circumference of a second connection surface of the second connection member.

In one or more exemplary embodiments the first connection surface has a first curve having a first predetermined radius and the second connection surface has a second curve having a second predetermined radius. By providing a curvature on the first connection surface and/or on a second connection surface, it may be possible to allow one of the connection surfaces to tilt relative to the other connection surface. This allows the load cell assembly to compensate for any eccentric force to be applied to the load cell and thereby allowing the load transmission member to tilt relative to the load cell, or vice versa, without damaging the first end of the load cell and/or without damaging the load transmission member. This further allows the load transmission member to self-correct relative to the load cell, which means that any force vector applied, that is parallel to the central axis of the load cell, will be measured by the load cell.

In one or more exemplary embodiments the first predetermined radius and the second predetermined radius have a substantially similar radius. By having the first predetermined radius and the second predetermined radius as being substantially similar, the inner curvature of one of the contact surfaces will match the inner curvature of the other contact surface. Thus, the forces applied to the load transmission member will be distributed evenly along the curvature of the contact surfaces. Furthermore, by having a matching curvature, where the curvature has a radius, the contact surface may be seen as spherical shaped surface, where the contact surfaces may slide relative to each other while maintaining a large contact surface. Thus, if the second connection member is tilted 5 degrees relative to the first connection member, the contact surface may maintain a large portion of the contact between the two parts and thereby ensuring that the tilting does not harm the load cell, the load transmission member, or the contact surfaces between the two connection members.

In one or more exemplary embodiments the first diameter is larger than the second diameter, and the third diameter is larger than the fourth diameter. By having the first and third diameter to be larger than the second and fourth diameter, the second connection member may be positioned relative to the first connection member in a direction that extends from the first end towards the second end of the first connection member. Thus, when the two connection members are aligned so that the first connection surface faces the second connection surface, and a force is applied to the load cell via the load transmission member, the first connection member will prevent the second connection member from moving relative to the first connection member in a direction towards the load cell.

By arranging the first connection member and the second connection member as described, the second connection member may transmit the force of the load transmission member to the first connection member, and the first connection member will transmit the force to the load cell. Thus, the transition of force from the load transmission member to the load cell will be performed using the first connection member and the second connection member, where the connection surfaces of the two connection members will be utilized to transfer the load. The first connection surface area will receive the load from the second connection surface area, where the load transmitted will be in a direction that extends from the smaller diameter towards the larger diameter of the first connection member or from the second connection member. Thus, when the first connection member has a smaller diameter that is closer to the load cell and a larger diameter that is distant to the load cell, the connection surface will prevent the second connection member to move relative to the first connection member in a direction away from the load cell, and thereby allow the force applied to the second connection member to be transferred to the first connection member, which in turn transmits the force to the load cell. Thus, if the second end of the load cell is fixed or has a counterforce, the load cell may be utilized as a tension load cell, where the load transmission member applies a force to the load cell that is in a direction away from the second end of the load cell.

In one or more exemplary embodiments the first diameter is smaller than the second diameter, and the third diameter is smaller than the fourth diameter. By having the first and third diameter to be smaller than the second and fourth diameter, the second connection member may be positioned relative to the first connection member in a direction that extends from the first end towards the second end of the first connection member. Thus, the second connection member will transmit the force of the load transmission member in a direction towards the load cell, where the first connection member prevents the second connection member from moving relative to the first connection member, and thereby allowing the force of the second connection member to be transmitted to the first connection member using the connection surfaces. Thus, when a force is applied via that load transmission member in a direction towards the load cell, the first connection member will take up the force of the second connection member, allowing the force to be transmitted to the load cell via the first connection member. The second end of the load cell may be securely fixed, e.g. to a foundation or a base, and the force may be applied in a direction towards the foundation or the base. Thus, the load cell may be utilized as a compression load cell, where the connection surfaces distribute the force of the load transmission member over the surface area where the two surfaces are in contact. This in return reduces the wear and tear of the connection between the load transmission member and the load cell.

In one or more exemplary embodiments the first connection member and/or the second connection member are ring shaped. The first connection member and the second connection members may be ring shaped, where each connection member may have an annular outer periphery and an annular inner periphery, where each connection member has a throughgoing opening in its centre.

In one or more exemplary embodiments, the first connection member may have a first central axis, and the second connection member may have a second central axis, where the first central axis and the second central axis are configured to be coaxial when the load cell assembly is in its assembled position. When the load applied to the load cell is parallel or coaxial to the central axis of the load cell assembly, the first central axis and the second central axis will be coaxial to the load applied. However, when the load applied may be eccentric, i.e. where the load applied is at an angle to the central axis of the load cell assembly, the second central axis may tilt relative to the first central axis, and thereby prevent the eccentric force to warp or provide a that may tilt the first end of the load cell.

In one or more exemplary embodiments the first connection member and/or the second connection member comprise a central throughgoing opening. The second connection member may be arranged in the central opening of the first connection member, where the inner surface of the central opening of the first connection member may be the first connection surface. The outer peripheral surface of the second connection member may be the second connection surface. Thus, the first connection member and the second connection member may be configured to be arranged circumferentially around a first end of the load cell, e.g. around a load receiving part, where the load receiving part extends through the central opening of the first connection member and/or the second connection member.

In one or more exemplary embodiments the first end and/or the second end of the first connection member and/or the second connection member is planar. The planar surface may be normal to the first central axis or the second central axis. By having a planar surface on the first connection member and/or the second connection member, the connection member may be configured to abut a planar part of the load cell and/or to abut a planar part of the load transmission member, where the force applied to the first connection member and/or the second connection member may be transmitted to the planar surface of the load cell and/or the load transmission member.

In one or more exemplary embodiments the first end of the load cell body comprises a first coupling member, where the first coupling member is configured to attach the first connection member to the load cell body. The first coupling member may be utilized to fix the first connection member to a first end of the load cell so that when a force is applied to the first connection member, the first connection member transfers the force directly to the load cell. The first connection member may e.g. be a fastening member that fixes the first connection member relative to the first end of the load cell.

In one or more exemplary embodiments the first coupling member comprises a first rod having a first free end and a second end attached to the first end of the load cell. The first rod may be a load receiving part of the load cell, where the first connection member may be arranged to be fixed relative to the first rod so that a force applied to the first connection member is transferred to the first rod (load receiving member).

In one or more exemplary embodiments the free end of the first rod has a threaded outer surface, and the load cell assembly further comprises a threaded locking member configured to securely fix the first connection member to the load cell. The threaded locking member may be rotationally coupled to the threaded outer surface of the first rod so that a rotational movement of the locking member may move the locking member in a direction that is parallel to a central axis of the rod and/or the load cell. The locking member may be configured to prevent the movement of the first connection member in a direction parallel to the fist central axis of the first connection member in a direction parallel to the central axis of the rod and/or in a direction parallel to the central axis of the load cell assembly. Thus, the locking member may fix the first connection member between an outer surface of the first end of the load cell and a lower surface (facing the outer surface of the first end of the load cell) of the locking member.

In one or more exemplary embodiments, the first rod may have a circular protrusion or a flange arranged proximal to the load cell (close to the second end of the rod), where protrusion prevent the movement of the first connection member in a direction towards the load cell.

The rod may have an outer diameter that is equal to or smaller than the inner diameter of the first connection member, where the protrusion may have an outer diameter that is larger than the inner diameter of the first connection member.

The present disclosure also relates to a load cell calibration device having a load cell assembly in accordance with the above disclosure.

### Brief description of the drawings

The following is an explanation of exemplary embodiments with reference to the drawings, in which:
Fig. 1 shows a calibration device for load cells having a load cell assembly in accordance with the present disclosure,
Fig. 2 shows a load cell assembly,
Fig. 3 shows a cross sectional view of one embodiment of a load cell assembly for tensile force,
Fig. 4 shows a cross sectional view of a part of the load cell assembly of Fig. 3 in an enlarged view, and
Fig. 5 shows one embodiment of a load cell assembly for compression force.

### Detailed description

Various exemplary embodiments and details are described hereinafter, with reference to the figures when relevant. It should be noted that the figures may or may not be drawn to scale and that elements of similar structures or functions are represented by reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

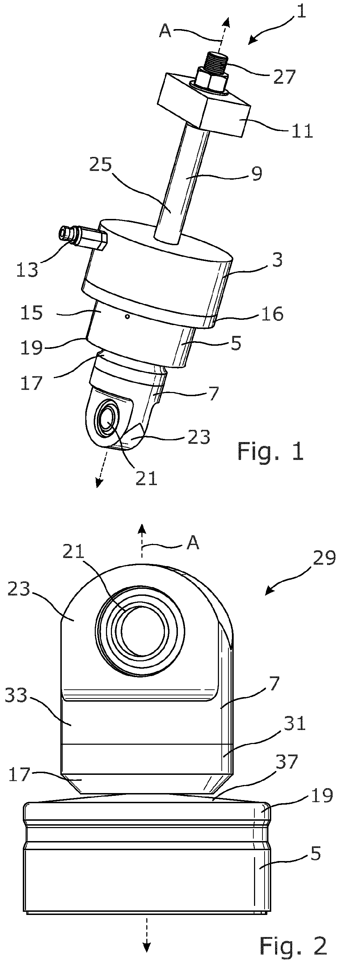

Fig. 1 shows a perspective view of a calibration device 1 for weighed installations, where the calibration device 1 may be utilized to provide a tensile force between a container and a foundation. The calibration device 1 may comprise an actuator 3 such as a hydraulic actuator having a hydraulic fluid communication line 13, where a second end 15 of a load cell 5 is attached to a first end 16 of the actuator 3, and where a second end 17 of a load transmission member 7 is attached to a first end 19 of the load cell 5. The load transmission member 7 may have an attachment part 21, positioned at a first end 23 of the load transmission member 7, which is adapted to be attached to a weighing installation, such as a container or to a foundation part, providing a counterforce. The actuator 3 may have a piston (not shown) which is attached to a piston rod 9, where a first end 25 of the piston rod 9 is attached to a piston (not shown) and the second end 27 may be attached to a weighed installation or a foundation for counterforce, where the second end 27 may comprise a second attachment part 11. When the actuator 3 is activated, the second end 27 of the piston rod is moved in a direction towards the first end 23 of the load transmission member 7 along the central axis A of the calibration device 1 or load cell assembly, where the movement may provide a measurable load to the weighed installation to calibrate the load cells of the weighed installation. An example of such a calibration device may be found in e.g. WO 2023/067128.

Fig. 2 is a side view of a load cell assembly 29, similar to that shown in Fig. 1, comprising a load cell 5 and a load transmission member 7, where the first end 19 of the load cell 5 is attached to a second end 17 of the load transmission member 7, and where the first end 23 of the load transmission member 7 comprises an attachment member 21. The load transmission member 7 may comprise a first coupling part 31 and a second coupling part 33, where the first coupling part 31 may be removably attached to the second coupling part 33. The load cell 5 may have a flexible membrane 37, where the force applied via the load transmission member 7 in a direction parallel to the central axis A of the load cell assembly 29 may be measured and registered by sensors and electronics inside the load cell 5, where the sensors can measure the deformation of the flexible membrane 37.

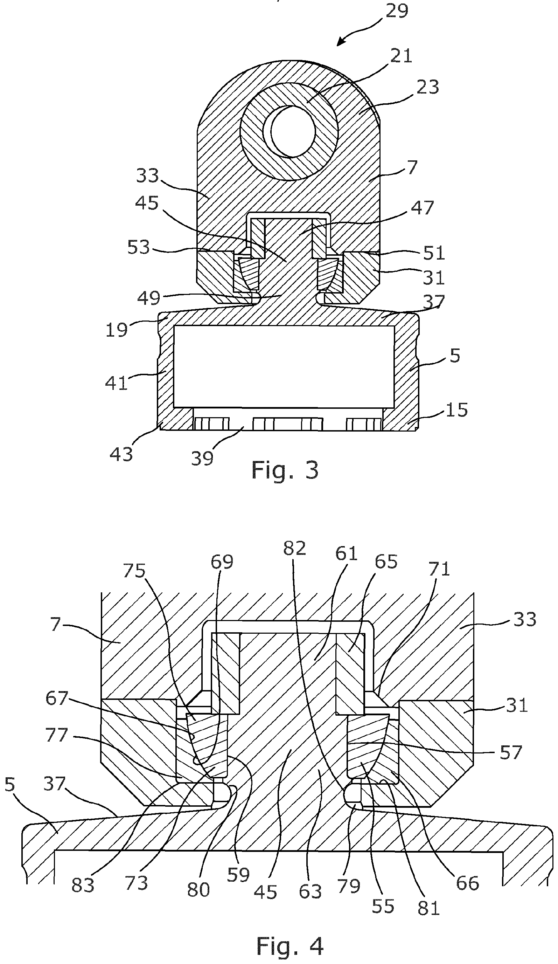

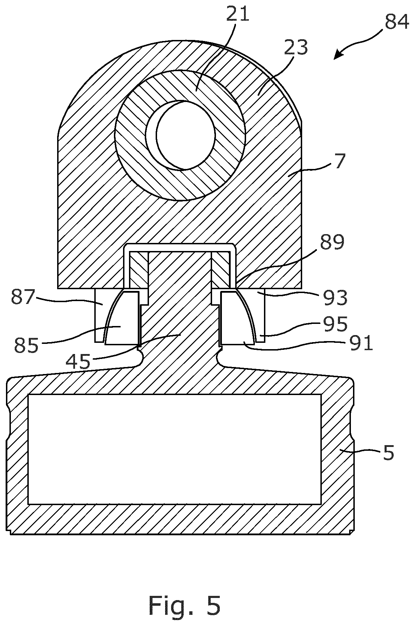

Fig. 3 shows the load cell assembly of Fig. 2 in a cross-sectional view, where the parts shown in Fig. 2 have the same reference numbers in Fig. 3. In the cross-sectional view it may be seen that the second end 15 of the load cell comprises an attachment part 39 where the attachment part 39 may be configured to attach the second end 15 of the load cell e.g. to a hydraulic actuator 3, as seen in Fig. 5, where the attachment part 39 may be a plug and socket attachment part, where a plug part of the hydraulic device 3 may be inserted into the attachment part 39 to attach the two parts to each other. The load cell 5 has a side wall 41, where the side wall is attached to the base 43 of the load cell and to a flexible membrane 37 of the load cell, where the side wall 41 may be solid, allowing the flexible membrane 37 to deform when a load is applied via the load transmission part 7. The load cell comprises sensors and electric circuitry to measure the deformation of the flexible membrane, to convert the deformation of the flexible membrane 37 into an electrical signal, representing the load applied to the load cell 5.

The load cell 5 may have a load receiving part 45, where the load receiving part may be connected to the flexible membrane 37. When a load is applied to the load receiving part 45, in the direction of the central axis A (shown in Fig. 2) the membrane deforms and the sensors measure the deformation and transform the signal into a force representation. The load cell may be a capacitive load cell, where the sensors measure a difference in capacitance when the flexible membrane deforms.

The load receiving part 45 may have a first free end 47 and a second end 49 that is attached to the flexible membrane 37. The load transmission member 7 may be in the form of a first coupling part 31 and a second coupling part 33, where the second coupling part 33 may be removably attached to the first coupling part 31, allowing the two parts to operate as one mechanical part. The second coupling part 33 has a lower surface 51 which may abut an upper surface 53 of the first coupling part 31, where the two parts may be mechanically coupled to each other, via e.g. a threaded connection, where the second coupling part has to be rotated relative to the first coupling part to release the second coupling part 33 from the first coupling part 31, along a rotational axis that is coextensive with the central axis A of the load cell assembly 29. Alternative ways of coupling the first coupling part to the second coupling part 33 may be envisaged, such as utilizing a fastening member such as a bolt, that extends through a part of the second coupling part 33 and engages with the first coupling part 31.

Fig. 4 shows in more detail how the load transmission member 7 is attached to the load cell 5. The load receiving part 45 may be configured to receive a first connection member 55, which is an annular shaped first connection member 55, where an inner surface 59 surrounds an outer surface 57 of the load receiving part 45. An upper part 61 of the load receiving part 45 may have a diameter that is slightly smaller than the diameter of a lower part 63 of the load receiving part 45 so that a fastening member 65, having a threaded inner surface which cooperates with a threaded outer surface of the upper part 61, may be utilized to fix the first connection member 55 securely in the direction of the longitudinal axis A.

The second connection member 66 surrounds the first connection member 55 so that an inner connection surface 67 of the second connection member 66 is in contact with an outer connection surface 69 of the first connection member 55. The first connection member 55 has a first end 71 that has a first diameter and a second end 73 that has a second diameter, where the first diameter is larger than the second diameter. The second connection member 66 has a first end 75 having a third diameter and a second end 77 having a fourth diameter, where the third diameter is larger than the fourth diameter. The first (inner) connection surface 67 and the second (outer) connection surface 69 have a matching curvature so that when a force is applied to the second connection member 66 in a direction away from the load cell 5 in a direction parallel to the central axis A, the first connection member 55 prevents the second connection member in moving in that direction and transfers the force of the second connection member to the first connection member 55 and as the first connection member 55 is fixed to the load receiving part 45, the force is transferred to the load receiving part 45 and the flexible membrane 37.

The first coupling part 31 has a flange 79 that has an upper surface 81 which abuts a lower surface 83 of the second connection member 66 so that when the first coupling part 31 and the second coupling part 33 are attached to each other, a force applied to the load transmission member 7 is transferred to the second connection member 66 and onwards to the flexible membrane 37 via the first connection member 55 and the load receiving part 45.

The load receiving part 45 may have a flange 80 that has an increased diameter, which is larger than the inner diameter of the first connection member 55, where the flange 80 abuts a lower surface of the first connection member 55 to ensure that the lower surface 82 of the first connection member 55 is at a distance from the flexible membrane 37 in order to allow the flange 79 of the first coupling part 31 to be positioned below the first connection member 55 and the second connection members 66.

Fig. 5 shows a similar load cell assembly 84 to that shown in Fig. 4, having all the same parts as shown in Fig. 4 with the exception that the first 85 and the second 87 connection members have been changed so that the first end 89 of the first connection member 85 and the first end 91 of the second connection member 87 have a diameter that is smaller than the diameter of the second end 93 of the first connection member 85 and the second end 95 of the second connection member 87. Thus, the load cell assembly shown in Fig. 5 is configured to receive a force in the direction of the load cell 5, where the load transmission member 7 transfers the force to the second connection member 87, which in turn transfers the force to the flexible membrane 37 via the load receiving part 45 and the first connection member 85.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### List of references

- 1: Calibration device
- 3: Actuator
- 5: Load cell
- 7: Load transmission member
- 9: Piston rod
- 11: Second attachment part
- 13: Fluid communication line
- 15: Second end of load cell
- 16: First end of actuator
- 17: Second end of load transmission member
- 19: First end of load cell
- 21: Attachment part
- 23: First end of the load transmission member
- 25: First end of piston rod
- 27: Second end of piston
- 29: Load cell assembly
- 31: First coupling part
- 33: Second coupling part
- 37: Flexible membrane
- 39: Load cell attachment part
- 41: Side wall
- 43: Base of load cell
- 45: Load receiving part
- 47: First free end of load receiving part
- 49: Second end of load receiving part
- 51: Lower surface of the second coupling part
- 53: Upper surface of first coupling part
- 55: First connection member
- 57: Outer surface of load receiving part
- 59: Inner surface of first connection member
- 61: Upper part of load receiving part
- 63: Lower part of load receiving part
- 65: Fastening member
- 66: Second connection member
- 67: Inner connection surface of second connection member
- 69: Outer connection surface of the first connection member
- 71: First end of first connection member
- 73: Second end of first connection member
- 75: First end of second connection member
- 77: Second end of second connection member
- 79: Flange of first coupling part
- 80: Flange of load receiving part
- 81: Upper surface of flange
- 82: Lower surface of the first connection member
- 83: Lower surface of second connection member
- 85: First connection member
- 87: Second connection member
- 89: First end of first connection member
- 91: First end of second connection member
- 93: Second end of first connection member
- 95: Second end of the second connection member
- A: Central axis of load cell assembly and calibration device

## Claims

1. A load cell assembly configured to measure an axial load in a direction of a central axis of the load cell assembly, the load cell assembly comprising:
- a load cell body having a first end and a second end,
- a load transmission member configured to transfer a load to the load cell body in a direction coaxial with the central axis of the load cell,
- a first connection member being connected with the first end of the load cell, where the first connection member has a first end facing the load transmission member, the first end having a first diameter, and a second end having a second diameter, and a first connection surface extending from the first diameter to the second diameter, and
- a second connection member being connected with the load transmission member, where the second connection member has a first end facing the load connection member, the first end having a third diameter and a second end facing the load cell, the second end having a fourth diameter, and a second connection surface extending from the third diameter to the fourth diameter, where the first diameter and the third diameter are different from the second diameter and fourth diameter,
- where the first connection surface faces the central axis of the load cell assembly and the second connection surface faces the first connection surface, or the second connection surface faces the central axis of the load cell assembly, and the first connection surface faces the second connection surface.

2. A load cell assembly in accordance with claim 1 wherein the first connection surface and the second connection surface are annular.

3. A load cell assembly in accordance with any of the preceding claims wherein the first connection surface has a first curve having a first predetermined radius and the second connection surface has a second curve having a second predetermined radius.

4. A load cell assembly in accordance with claim 3, where the first predetermined radius and the second predetermined radius have a substantially similar radius.

5. A load cell assembly in accordance with any of the preceding claims wherein the first diameter is larger than the second diameter, and where the third diameter is larger than the fourth diameter.

6. A load cell assembly in accordance with any of the preceding claims wherein the first diameter is smaller than the second diameter, and where the third diameter is smaller than the fourth diameter.

7. A load cell assembly in accordance with any of the preceding claims wherein the first connection member and/or the second connection member are ring shaped.

8. A load cell assembly in accordance with any of the preceding claims wherein the first connection member has a first central axis, and the second connection member has a second central axis, where the first central axis and the second central axis are configured to be coaxial when the load cell assembly is in its assembled position.

9. A load cell assembly in accordance with any of the preceding claims wherein the first connection member and/or the second connection member comprise a central throughgoing opening.

10. A load cell assembly in accordance with any of the preceding claims wherein the first end and/or the second end of the first connection member and/or the second connection member is planar.

11. A load cell assembly in accordance with any of the preceding claims wherein the first end of the load cell body comprises a first coupling member, where the first coupling member is configured to attach the first connection member to the load cell body.

12. A load cell assembly in accordance with claim 11 wherein the first coupling member comprises a first rod having a first free end and a second end attached to the first end of the load cell.

13. A load cell assembly in accordance with claim 12 wherein the free end of the first rod has a threaded outer surface and where the load cell assembly further comprises a threaded locking member, configured to securely fix the first connection member to the load cell.

14. A calibration device for a weighed installation comprising the load cell assembly in accordance with claims 1-13.
